# EUROPÄISCHE PATENTSCHRIFT

(11) **EP 4 026 216 B1**
(45) Veröffentlichungstag und Bekanntmachung des Hinweises auf die Patenterteilung: **22.10.2025**
(21) Anmeldenummer: 20758117.4
(22) Anmeldetag: 06.08.2020
(51) Int. Cl.: H02J 3/32

(54) **VERFAHREN ZUM BETREIBEN EINER ANLAGE UND ANLAGE**
METHOD FOR OPERATING A SYSTEM, AND SYSTEM
PROCÉDÉ DE FONCTIONNEMENT D'UN SYSTÈME, ET SYSTÈME

(30) Priorität: 06.09.2019 DE 102019006305
(43) Veröffentlichungstag der Anmeldung: 13.07.2022
(73) Patentinhaber: SEW-EURODRIVE GmbH & Co. KG, 76646 Bruchsal (DE)
(72) Erfinder: MORVAN, Nikolas, 86938 Schondorf (DE); HALDER, Wolfgang, 88299 Leutkirch (DE); KÜHEFUß, Thomas, 88281 Schlier (DE)
(86) Internationale Anmeldenummer: PCT/EP2020/025362
(87) Internationale Veröffentlichungsnummer: WO 2021/043436

(56) Entgegenhaltungen:
- DE-A1- 102009 031 257
- DE-A1- 102017 004 156
- DE-A1- 102017 006 819
- DE-A1- 102019 001 111
- DE-T5- 112013 004 316

## Beschreibung

Die Erfindung betrifft ein Verfahren zum Betreiben einer Anlage und eine Anlage.

Es ist allgemein bekannt, dass in einer Anlage Elektromotoren angeordnet sind zur Durchführung von Arbeitsabläufen beim Betreiben der Anlage.

**Aus der** DE 10 2017 006819 A1 **ist als nächstliegender Stand der Technik ist ein Verfahren zum Betreiben eines Systems bekannt.**

**Aus der** DE 10 2017 004156 A1 **ist ein Antriebssystem bekannt.**

**Aus der** DE 10 2019 001111 A **ist ein Verfahren zum Betreiben eines Antriebssystems bekannt.**

**Aus der** DE 10 2009 031257 A1 **ist ein Umrichter bekannt.**

**Aus der** DE 11 2013 004316 T5 **ist ein Wechselstrommotor-Antriebssystem bekannt.**

Der Erfindung liegt daher die Aufgabe zugrunde, eine Anlage umweltschonend, insbesondere ressourcenschonend, weiterzubilden.

Erfindungsgemäß wird die Aufgabe bei dem Verfahren nach Anspruch 1 und bei der Anlage nach den in Anspruch 7 angegebenen Merkmalen gelöst.

Wichtige Merkmale der Erfindung bei dem Verfahren zum Betreiben einer Anlage sind, dass die Anlage einen AC/DC-Wandler aufweist, dessen gleichspannungsseitiger Anschluss elektrisch parallel geschaltet ist zu einem gleichspannungsseitigen Anschluss eines Wechselrichters und einem ersten gleichspannungsseitigen Anschluss eines DC/DC-Wandlers, an dessen zweitem gleichspannungsseitigen Anschluss ein Energiespeicher, insbesondere Akkumulator und/oder Doppelschichtkondensator, wie Ultracap, angeschlossen ist,
wobei aus einem Wechselspannungsversorgungsnetz, aus welchem der wechselspannungsseitige Anschluss des AC/DC-Wandlers speisbar ist, elektrische Leistung dem gleichspannungsseitigen Anschluss des AC/DC-Wandlers zugeführt wird, wenn der Leistungsbezug, insbesondere also der Bezug elektrischer Leistung, des ersten Wechselrichters, insbesondere an seinem gleichspannungsseitigen Anschluss, positiv ist, insbesondere also ein vom ersten Wechselrichter gespeister Elektromotor motorisch betrieben wird,
wobei die elektrische Leistung auf einen Sollwert hingeregelt wird,
und wobei aus dem Wechselspannungsversorgungsnetz keine elektrische Leistung dem gleichspannungsseitigen Anschluss des AC/DC-Wandlers zugeführt wird, wenn der Leistungsbezug, insbesondere also der Bezug elektrischer Leistung, des ersten Wechselrichters, insbesondere an seinem gleichspannungsseitigen Anschluss, negativ ist, insbesondere also der vom ersten Wechselrichter gespeister Elektromotor generatorisch betrieben wird.

Von Vorteil ist dabei, dass möglichst wenig Energie aus dem Wechselspannungsversorgungsnetz bezogen werden muss. Somit sind die Ressourcen und Umwelt geschont. Außerdem ist der Leistungsbezug vom Wechselspannungsversorgungsnetz vergleichmäßigt und daher Verlustleistungen und notwendige Leitungsquerschnitte verringert. Nur im Gesamt-generatorischen Fall wird der Leistungsbezug gestoppt, so dass nur ein aufladen des Energiespeichers ausgeführt wird. Im motorischen Betrieb wird aus dem Wechselspannungsversorgungsnetz nur ein geringer Leistungswert bezogen. Benötigte unterschiedliche Leistungswerte und Leistungsschwankungen werden vom Energiespeicher ausgeglichen. Durch diesen möglichst konstanten Bezug von Leistung aus dem Wechselspannungsversorgungsnetz sind außerdem Netzspannungsschwankungen verringerbar.

Bei einer vorteilhaften Ausgestaltung ist statt des ersten Wechselrichters eine Parallelschaltung des ersten Wechselrichters mit weiteren Wechselrichtern und/oder Verbrauchern dem gleichspannungsseitigen Anschluss des AC/DC-Wandlers elektrisch parallel zugeschaltet. Von Vorteil ist dabei, dass jeder der Wechselrichter und/oder Verbraucher seinen jeweiligen Leistungsbezug zeitlich wiederkehrend erfasst und somit der Gesamtleitungsbezug einfach bestimmbar ist.

Bei einer vorteilhaften Ausgestaltung wird nach einer Aufladung des Energiespeichers die Anlage zyklisch betrieben,
insbesondere also die Arbeitsabläufe der Anlage, insbesondere die Betriebsart des oder der Wechselrichter, periodisch wiederholt werden, wobei eine Periode als Zyklus bezeichnet wird und die Periodendauer als Zykluszeit bezeichnet wird,
wobei als Sollwert der Quotient aus der für den gesamten Zyklus benötigten Energiemenge, insbesondere von dem ersten Wechselrichter oder von allen Wechselrichtern und/oder Verbrauchern benötigten Energiemenge, und der um eine Zeitspanne verminderten Zykluszeit verwendet wird,
wobei die Zeitspanne insbesondere während des Zyklus alle Zeitpunkte umfasst, bei denen der Gesamt-Leistungsbedarf, insbesondere des ersten Wechselrichters oder aller Wechselrichter und/oder Verbraucher, negativ ist. Von Vorteil ist dabei, dass der Leistungsbezug aus dem Wechselspannungsnetz vergleichmäßigt und somit viel geringere Strom-Spitzenwerte aufweist.

Bei einer vorteilhaften Ausgestaltung erfasst der erste Wechselrichter seinen Leistungsbedarf zeitlich wiederkehrend und meldet diesen über eine Datenübertragungskanal an eine Steuerung, welche mittels Datenübertragungskanälen sowohl mit dem AC/DC-Wandler als auch mit dem DC/DC-Wandler verbunden ist und welche einen Sollwert an aus dem Wechselspannungsversorgungnetz über den AC/DC-Wandler zu beziehender Leistung an den AC/DC-Wandler zeitlich wiederkehrend übermittelt und welche einen Sollwert an dem Energiespeicher zuzuführender oder abzuführender Leistung dem DC/DC-Wandler übermittelt. Von Vorteil ist dabei, dass der Leistungsbezug aus dem Wechselspannungsnetz vergleichmäßigt und somit viel geringere Strom-Spitzenwerte aufweist.

Bei einer anderen vorteilhaften Ausgestaltung erfassen alle Wechselrichter und/oder Verbraucher ihren Leistungsbedarf zeitlich wiederkehrend und melden ihren jeweiligen Leistungsbedarf über einen jeweiligen Datenübertragungskanal an eine Steuerung, welche mittels Datenübertragungskanälen sowohl mit dem AC/DC-Wandler als auch mit dem DC/DC-Wandler verbunden ist und welche einen Sollwert an aus dem Wechselspannungsversorgungnetz über den AC/DC-Wandler zu beziehender Leistung an den AC/DC-Wandler zeitlich wiederkehrend übermittelt und welche einen Sollwert an dem Energiespeicher zuzuführender oder abzuführender Leistung dem DC/DC-Wandler übermittelt. Von Vorteil ist dabei, dass der Energiespeicher die Vergleichmäßigung des Netzbezugs ermöglicht. Stromschwankungen werden vom Energiespeicher abgepuffert.

Bei einer vorteilhaften Ausgestaltung speist der erste Wechselrichter einen ersten Elektromotor. Von Vorteil ist dabei, dass der Motor motorisch oder generatorisch betreibbar ist. Somit ist der Leistungsbezug des Wechselrichters an seinem gleichspannungsseitigen Anschluss positiv oder negativ.

Bei einer vorteilhaften Ausgestaltung speist der jeweilige Wechselrichter einen jeweiligen Elektromotor. Von Vorteil ist dabei, dass der jeweilige Motor motorisch oder generatorisch betreibbar ist. Somit ist der Leistungsbezug des jeweiligen Wechselrichters an seinem gleichspannungsseitigen Anschluss positiv oder negativ.

Bei einer vorteilhaften Ausgestaltung wird vor dem zyklischen Betreiben für die Energiemenge ein Wert vorgegeben,
wobei am Ende jedes Zyklus die im Energiespeicher vorhandene Ladeenergie bestimmt wird und von einem Regler, insbesondere PI-Regler, der Wert derart gestellt wird, dass die jeweils bestimmte Ladeenergie auf einen Sollwert hingeregelt wird, insbesondere welcher dem zu mehr als 80% aufgeladenen Energiespeicher entspricht. Von Vorteil ist dabei, dass auch bei nicht exakt bekannter, pro Zyklus notwendiger Energiemenge eine übergeordnete Nachregelung ermöglicht ist. Vorzugsweise arbeitet der Regler aber nur zu diskreten Zeitpunkten, also am Ende des jeweiligen Zyklus. Denn dann ist die für den letzten Zyklus benötigte Energiemenge exakt bestimmbar und/oder der Ladezustand des Energiespeichers. Davon ausgehend ist der Wert entsprechend regelbar, damit eine möglichst hohe Aufladung des Energiespeichers und somit Pufferfähigkeit erhalten bleibt.

Besonders vorteilhaft ist dabei auch, dass bei Alterung oder thermischer Belastung des Energiespeichers dies automatisch berücksichtigt wird. Denn da auf den Ladezustand hin geregelt wird, ist die rechnerische Energiemenge bei Alterung des Energiespeichers, also Kapazitätsverminderung, ansteigend, insbesondere tendenziell größer als die physikalisch wirklich von den Motoren der Anlage verbrauchte Energiemenge.

Wichtige Merkmale bei der Anlage zur Durchführung eines vorgenannten Verfahrens sind, dass die Anlage einen aus einem Wechselspannungsversorgungsnetz speisbaren AC/DC-Wandler aufweist, dessen gleichspannungsseitiger Anschluss elektrisch parallel geschaltet ist zu einem gleichspannungsseitigen Anschluss eines ersten Wechselrichters und einem ersten gleichspannungsseitigen Anschluss eines DC/DC-Wandlers, an dessen zweitem gleichspannungsseitigen Anschluss ein Energiespeicher, insbesondere Akkumulator und/oder Doppelschichtkondensator, wie Ultracap, angeschlossen ist,

wobei eine Steuerung mittels Datenübertragungskanälen mit dem ersten Wechselrichter, dem AC/DC-Wandler und dem DC/DC-Wandler verbunden ist. Von Vorteil ist dabei, dass abhängig vom Gesamtleistungsbedarf der Netzbezug steuerbar ist.

Bei einer vorteilhaften Ausgestaltung ist statt des ersten Wechselrichters eine Parallelschaltung des ersten Wechselrichters mit weiteren Wechselrichtern und/oder Verbrauchern dem gleichspannungsseitigen Anschluss des AC/DC-Wandlers elektrisch parallel zugeschaltet,
wobei die Steuerung mittels Datenübertragungskanälen mit den weiteren Wechselrichtern und/oder Verbrauchern verbunden ist. Von Vorteil ist dabei, dass abhängig vom Gesamtleistungsbedarf der Netzbezug steuerbar ist.

Weitere Vorteile ergeben sich aus den Unteransprüchen.

Die Erfindung wird nun anhand von schematischen Abbildungen näher erläutert:

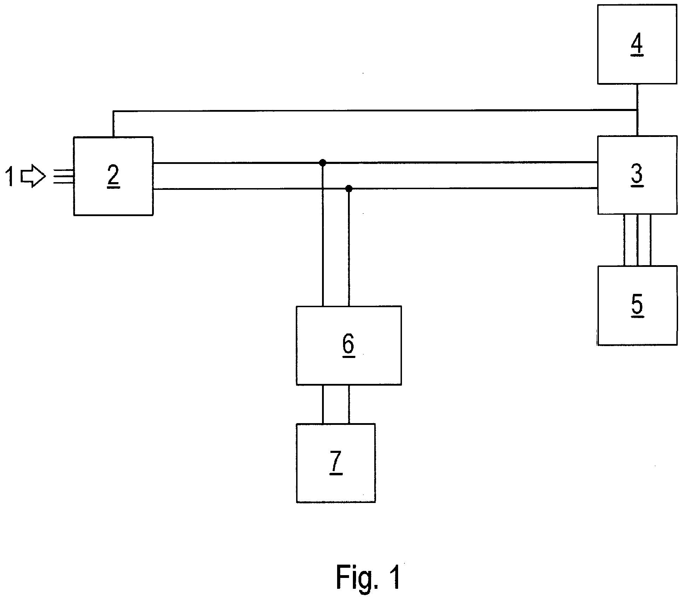

In der Figur 1 ist eine erfindungsgemäße Anordnung schematisch dargestellt.

Dabei erzeugt ein von einem Wechselspannungsversorgungsnetz 1 gespeister AC/DC-Wandler 2, insbesondere steuerbarer Gleichrichter, eine Gleichspannung, insbesondere Zwischenkreisspannung, aus der ein Wechselrichter 3 gespeist wird, der einem Elektromotor 5 eine Drehspannung zur Verfügung stellt.

Mittels eines DC/DC-Wandlers ist elektrische Leistung von einem Energiespeicher 7 an den gleichspannungsseitigen Anschluss des Wechselrichters 3 gesteuert führbar oder umgekehrt.

Der gleichspannungsseitige Anschluss des Wechselrichters 3 ist parallel geschaltet zum gleichspannungsseitigen Anschluss des AC/DC-Wandlers 2.

Der Wechselrichter 3 ist mittels einer Datenbusverbindung mit einer übergeordneten Steuerung 4 verbunden

Parallel zum Wechselrichter 3 sind weitere Wechselrichter und/oder Verbraucher verbindbar, die ebenfalls mittels einer Datenbusverbindung mit einer übergeordneten Steuerung 4 verbunden sind.

Die Steuerung 4 ist mit dem AC/DC-Wandler 2 mittels Datenbus verbunden und ist somit in der Lage, die vom Wechselspannungsversorgungsnetz 1, welches den wechselspannungsseitigen Anschluss des AC/DC-Wandlers 2 speist, in den Zwischenkreis fließende Leistung zu steuern.

Die Steuerung erfasst also den Leistungsbedarf aller Wechselrichter und/oder Verbraucher und bestimmt insbesondere durch Aufsummierung den Gesamt-Leistungsbedarf, welcher aus dem Energiespeicher 7 über den DC/DC-Wandler 6 und/oder aus dem Wechselspannungsversorgungsnetz 1 über den AC/DC-Wandler 2 zu liefern ist.

Der Leistungsbedarf eines Wechselrichters im motorischen Betrieb ist positiv und im generatorischen Betrieb ist er negativ.

Die Steuerung 4 steuert also über den DC/DC-Wandler 6 die vom Energiespeicher in den Zwischenkreis zu liefernde oder vom Zwischenkreis aufzunehmende Leistung. Außerdem steuert die Steuerung 4 über den AC/DC-Wandler 2 die aus dem Wechselspannungsversorgungsnetz in den Zwischenkreis zu liefernde Leistung.

Vorzugsweise wird bei Leistungsbedarf zunächst der Energiespeicher entleert und danach aus dem Wechselspannungsversorgungsnetz 1 Leistung bezogen.

Bei weiteren erfindungsgemäßen Ausführungsbeispielen ist die Anordnung in einer Anlage oder Maschine angeordnet, welche im Normalbetrieb zyklisch betrieben wird.

Zu Beginn, also vor dem Normalbetrieb, wird der Energiespeicher aufgeladen. Im Normalbetrieb wird dann in jedem Zyklus der Gesamt-Leistungsbedarf aller Wechselrichter und/oder Verbraucher bestimmt.

Wenn der Gesamt-Leistungsbedarf positiv ist, insbesondere also die Wechselrichter überwiegend motorisch betrieben werden, wird Leistung aus dem Wechselspannungsversorgungsnetz bezogen, wobei der AC/DC-Wandler 2 den Leistungsbezug erfasst und auf einen Sollwert hinregelt. Zur Erfassung des Leistungsbezugs wird der am gleichspannungsseitigen Anschluss des AC/DC-Wandlers 2 austretende Strom erfasst und die an diesem gleichspannungsseitigen Anschluss vorhandene Spannung.

Als Sollwert wird der Quotient aus der für den gesamten Zyklus von den Wechselrichtern und/oder Verbrauchern benötigten Energiemenge und der um eine Zeitspanne verminderten Zykluszeit verwendet. Die Zeitspanne umfasst alle Zeitpunkte, bei denen der Gesamt-Leistungsbedarf der Wechselrichter und/oder der Verbraucher negativ ist.

Während der Zeitspanne ist der Gesamt-Leistungsbedarf negativ. Dies bedeutet, dass die Wechselrichter und/oder Verbraucher in Summe Leistung erzeugen und dem Zwischenkreis zur Verfügung stellen, so dass aus dem Zwischenkreis der Energiespeicher geladen werden kann. Während der restlichen Zykluszeit, also außerhalb der Zeitspanne, wird aus dem Energiespeicher dann Leistung bezogen, wenn der Leistungsbedarf der Wechselrichter und/oder Verbraucher in Summe größer ist als der Quotient.

Somit wird aus dem Wechselspannungsversorgungsnetz 1 eine möglichst konstante Leistung, also der Quotient, bezogen, wobei Leistungsabweichungen bezogen auf den Quotienten mittels des Energiespeichers gepuffert und/oder aufgefangen werden.

Mittels der Erfindung ist eine Vergleichmäßigung, also eine betragsmäßige Reduzierung der Entladeströme und Ladeströme des Energiespeichers ermöglicht.

Als Verbraucher ist beispielsweise die Steuerung 4 verwendbar, indem diese aus dem Zwischenkreis versorgt wird, also ihr gleichspannungsseitiger Versorgungsanschluss parallel zum gleichspannungsseitigen Anschluss des Wechselrichters geschaltet ist.

Um Stromspitzen abzudämpfen ist zusätzlich im Zwischenkreis ein Doppelschichtkondensator, wie Ultracap, vorsehbar, welcher parallel zum gleichspannungsseitigen Anschluss des Wechselrichters geschaltet ist.

Bei weiteren erfindungsgemäßen Ausführungsbeispielen ist die Zeitspanne nicht einfach zusammenhängend ausgeführt, sondern mehrmehrteilig ausgeführt, insbesondere weist also mehrere voneinander zeitlich beabstandete Einzelzeitspannen auf.

### Bezugszeichenliste

1 Wechselspannungsversorgungsnetz
2 AC/DC-Wandler, insbesondere steuerbarer Gleichrichter
3 Wechselrichter
4 Steuerung
5 Elektromotor
6 DC/DC-Wandler
7 Energiespeicher

## Patentansprüche

1. Verfahren zum Betreiben einer Anlage,
wobei die Anlage einen AC/DC-Wandler (2) aufweist, dessen gleichspannungsseitiger Anschluss elektrisch parallel geschaltet ist zu einem gleichspannungsseitigen Anschluss eines **ersten** Wechselrichters (3) und einem ersten gleichspannungsseitigen Anschluss eines DC/DC-Wandlers (6), an dessen zweitem gleichspannungsseitigen Anschluss ein Energiespeicher (7), insbesondere Akkumulator und/oder Doppelschichtkondensator, wie Ultracap, angeschlossen ist,
**wobei** aus einem Wechselspannungsversorgungsnetz (1), aus welchem der wechselspannungsseitige Anschluss des AC/DC-Wandlers (2) speisbar ist, elektrische Leistung dem gleichspannungsseitigen Anschluss des AC/DC-Wandlers (2) zugeführt wird, wenn der Leistungsbezug, insbesondere also der Bezug elektrischer Leistung, des ersten Wechselrichters (3), insbesondere an seinem gleichspannungsseitigen Anschluss, positiv ist, insbesondere also ein vom ersten Wechselrichter (3) gespeister Elektromotor (5) motorisch betrieben wird,
wobei die elektrische Leistung auf einen Sollwert hingeregelt wird,
und dass aus dem Wechselspannungsversorgungsnetz (1) keine elektrische Leistung dem gleichspannungsseitigen Anschluss des AC/DC-Wandlers (2) zugeführt wird, wenn der Leistungsbezug, insbesondere also der Bezug elektrischer Leistung, des ersten Wechselrichters (3), insbesondere an seinem gleichspannungsseitigen Anschluss, negativ ist, insbesondere also der vom ersten Wechselrichter (3) gespeister Elektromotor (5) generatorisch betrieben wird,
**dadurch gekennzeichnet, dass**
**statt des ersten Wechselrichters (3) eine Parallelschaltung des ersten Wechselrichters (3) mit weiteren Wechselrichtern und/oder Verbrauchern dem gleichspannungsseitigen Anschluss des AC/DC-Wandlers (2) elektrisch parallel zugeschaltet ist,**
**wobei nach einer Aufladung des Energiespeichers die Anlage zyklisch betrieben wird,**
**also Arbeitsabläufe der Anlage, nämlich die Betriebsart des oder der Wechselrichter, periodisch wiederholt werden, wobei eine Periode als Zyklus bezeichnet wird und die Periodendauer als Zykluszeit bezeichnet wird,**
**wobei als der Sollwert der Quotient aus der für den gesamten Zyklus benötigten Energiemenge, nämlich aus der für den gesamten Zyklus von dem ersten Wechselrichter (3) oder von allen Wechselrichtern und/oder Verbrauchern benötigten Energiemenge, und der um eine Zeitspanne verminderten Zykluszeit verwendet wird,**
**wobei die Zeitspanne während des Zyklus alle Zeitpunkte umfasst, bei denen der Gesamt-Leistungsbedarf des ersten Wechselrichters (3) oder aller Wechselrichter und/oder Verbraucher negativ ist.**

2. Verfahren nach Anspruch 1,
**dadurch gekennzeichnet, dass**
der erste Wechselrichter (3) seinen Leistungsbedarf zeitlich wiederkehrend erfasst und über eine Datenübertragungskanal an eine Steuerung (4) meldet, welche mittels Datenübertragungskanälen sowohl mit dem AC/DC-Wandler (2) als auch mit dem DC/DC-Wandler (6) verbunden ist und welche einen Sollwert an aus dem Wechselspannungsversorgungnetz über den AC/DC-Wandler (2) zu beziehender Leistung an den AC/DC-Wandler (2) zeitlich wiederkehrend übermittelt und welche einen Sollwert an dem Energiespeicher (7) zuzuführender oder abzuführender Leistung dem DC/DC-Wandler (6) übermittelt.

3. Verfahren nach Anspruch 1,
**dadurch gekennzeichnet, dass**
**der oder** alle Wechselrichter und/oder Verbraucher ihren Leistungsbedarf zeitlich wiederkehrend erfassen und über einen jeweiligen Datenübertragungskanal an eine Steuerung (4) melden, welche mittels Datenübertragungskanälen sowohl mit dem AC/DC-Wandler (2) als auch mit dem DC/DC-Wandler (6) verbunden ist und welche einen Sollwert an aus dem Wechselspannungsversorgungnetz über den AC/DC-Wandler (2) zu beziehender Leistung an den AC/DC-Wandler (2) zeitlich wiederkehrend übermittelt und welche einen Sollwert an dem Energiespeicher (7) zuzuführender oder abzuführender Leistung dem DC/DC-Wandler (6) übermittelt.

4. Verfahren nach einem der vorangegangenen Ansprüche,
**dadurch gekennzeichnet, dass**
der erste Wechselrichter (3) einen ersten Elektromotor (5) speist.

5. Verfahren nach einem der vorangegangenen Ansprüche,
**dadurch gekennzeichnet, dass**
**der oder** der jeweilige Wechselrichter einen jeweiligen Elektromotor (5) speist.

6. Verfahren nach einem der Ansprüche 1 bis 5,
**dadurch gekennzeichnet, dass**
vor dem zyklischen Betreiben für die Energiemenge ein Wert vorgegeben wird,
wobei am Ende jedes Zyklus die im Energiespeicher (7) vorhandene Ladeenergie bestimmt wird und von einem Regler, insbesondere Pl-Regler, der Wert derart gestellt wird, dass die jeweils bestimmte Ladeenergie auf einen Sollwert hingeregelt wird, insbesondere welcher dem zu mehr als 80% aufgeladenen Energiespeicher (7) entspricht.

7. Anlage zur Durchführung eines Verfahrens nach einem der vorangegangenen Ansprüche,
wobei die Anlage einen aus einem Wechselspannungsversorgungsnetz (1) speisbaren AC/DC-Wandler (2) aufweist, dessen gleichspannungsseitiger Anschluss elektrisch parallel geschaltet ist zu einem gleichspannungsseitigen Anschluss eines ersten Wechselrichters (3) und einem ersten gleichspannungsseitigen Anschluss eines DC/DC-Wandlers(6), an dessen zweitem gleichspannungsseitigen Anschluss ein Energiespeicher (7), insbesondere Akkumulator und/oder Doppelschichtkondensator, wie Ultracap, angeschlossen ist,
wobei eine Steuerung (4) mittels Datenübertragungskanälen mit dem ersten Wechselrichter (3), dem AC/DC-Wandler (2) und dem DC/DC-Wandler (6) verbunden ist,
**wobei statt des ersten Wechselrichters (3) eine Parallelschaltung des ersten Wechselrichters (3) mit weiteren Wechselrichtern und/oder Verbrauchern dem gleichspannungsseitigen Anschluss des AC/DC-Wandlers (2) elektrisch parallel zugeschaltet ist,**
**wobei die Steuerung (4) mittels Datenübertragungskanälen mit den weiteren Wechselrichtern und/oder Verbrauchern verbunden ist.**

## Claims

1. Method for operating an installation,
wherein the installation has an AC-to-DC converter (2), the DC voltage-side terminal of which is wired electrically in parallel with a DC voltage-side terminal of a first inverter (3) and a first DC voltage-side terminal of a DC-to-DC converter (6), to the second DC voltage-side terminal of which an energy storage device (7), in particular an accumulator and/or an electric double-layer capacitor such as an ultracapacitor, is connected,
wherein electric power is supplied to the DC voltage-side terminal of the AC-to-DC converter (2) from an AC voltage supply grid (1), from which the AC voltage-side terminal of the AC-to-DC converter (2) can be fed, when the power draw, i.e. in particular the drawing of electric power, of the first inverter (3), in particular at its DC voltage-side terminal, is positive, i.e. in particular when an electric motor (5) fed by the first inverter (3) is operated in motor mode, wherein the electric power is controlled towards a setpoint,
and no electric power is supplied to the DC voltage-side terminal of the AC-to-DC converter (2) from the AC voltage supply grid (1) when the power draw, i.e. in particular the drawing of electric power, of the first inverter (3), in particular at its DC voltage-side terminal, is negative, i.e. in particular when the electric motor (5) fed by the first inverter (3) is operated in generator mode,
**characterised in that**
instead of the first inverter (3), a parallel circuit of the first inverter (3) together with further inverters and/or loads is connected electrically in parallel with the DC voltage-side terminal of the AC-to-DC converter (2),
wherein the installation is operated cyclically once the energy storage device has been charged,
i.e. work routines of the installation, namely the operating mode of the inverter(s), are periodically repeated, wherein a period is referred to as a cycle and the period duration is referred to as the cycle time,
wherein the ratio between the amount of energy required for the entire cycle, namely the amount of energy required by the first inverter (3) or by all the inverters and/or loads for the entire cycle, and the cycle time minus a length of time is used as the setpoint,
wherein the length of time during the cycle includes all the times at which the total power demand of the first inverter (3) or of all the inverters and/or loads is negative.

2. Method according to claim 1,
**characterised in that**
the first inverter (3) detects its power demand recurrently over time and reports it via a data transmission channel to a control unit (4) which is connected to both the AC-to-DC converter (2) and the DC-to-DC converter (6) by means of data transmission channels and which transmits to the AC-to-DC converter (2), recurrently over time, a setpoint for power to be drawn from the AC voltage supply grid via the AC-to-DC converter (2) and transmits to the DC-to-DC converter (6) a setpoint for power to be supplied to or removed from the energy storage device (7).

3. Method according to claim 1,
**characterised in that**
the inverter or all the inverters and/or loads detect their power demand recurrently over time and report it via a respective data transmission channel to a control unit (4) which is connected to both the AC-to-DC converter (2) and the DC-to-DC converter (6) by means of data transmission channels and which transmits to the AC-to-DC converter (2), recurrently over time, a setpoint for power to be drawn from the AC voltage supply grid via the AC-to-DC converter (2) and transmits to the DC-to-DC converter (6) a setpoint for power to be supplied to or removed from the energy storage device (7).

4. Method according to any of the preceding claims,
**characterised in that**
the first inverter (3) feeds a first electric motor (5).

5. Method according to any of the preceding claims,
**characterised in that**
the inverter or each inverter feeds a respective electric motor (5).

6. Method according to any of claims 1 to 5,
**characterised in that**
a value is predetermined for the amount of energy before the cyclical operation,
wherein the charging energy available in the energy storage device (7) is determined at the end of each cycle, and the value is set by a controller, in particular a PI controller, such that the charging energy determined in each case is controlled towards a setpoint, which in particular corresponds to the energy storage device (7) being charged to more than 80%.

7. Installation for carrying out a method according to any of the preceding claims, wherein the installation has an AC-to-DC converter (2) that can be fed from an AC voltage supply grid (1), the DC voltage-side terminal of said AC-to-DC converter being wired electrically in parallel with a DC voltage-side terminal of a first inverter (3) and a first DC voltage-side terminal of a DC-to-DC converter (6), to the second DC voltage-side terminal of which an energy storage device (7), in particular an accumulator and/or an electric double-layer capacitor such as an ultracapacitor, is connected,
wherein a control unit (4) is connected to the first inverter (3), to the AC-to-DC converter (2) and to the DC-to-DC converter (6) by means of data transmission channels,
wherein instead of the first inverter (3), a parallel circuit of the first inverter (3) together with further inverters and/or loads is connected electrically in parallel with the DC voltage-side terminal of the AC-to-DC converter (2),
wherein the control unit (4) is connected to the further inverters and/or loads by means of data transmission channels.

## Revendications

1. Procédé de fonctionnement d'une installation,
l'installation comprenant un convertisseur CA/CC (2) dont la borne située côté tension continue est connectée électriquement en parallèle à une borne située côté tension continue d'un premier onduleur (3) et à une première borne située côté tension continue d'un convertisseur CC/CC (6) au niveau de la deuxième borne située côté tension continue duquel est raccordé un accumulateur d'énergie (7), en particulier un accumulateur et/ou un condensateur à double couche, tel que l'Ultracap,
de la puissance électrique est fournie à la borne située côté tension continue du convertisseur CA/CC (2) à partir d'un réseau d'alimentation en tension alternative (1) à partir duquel la borne située côté tension alternative du convertisseur CA/CC (2) peut être alimentée, lorsque la consommation de puissance, en particulier la consommation de puissance électrique, du premier onduleur (3), en particulier au niveau de sa borne située côté tension continue, est positive, en particulier lorsqu'un moteur électrique (5) alimenté par le premier onduleur (3) fonctionne à l'aide d'un moteur,
la puissance électrique étant régulée par rapport à une valeur de consigne,
et aucune puissance électrique n'étant fournie à la borne située côté tension continue du convertisseur CA/CC (2) à partir du réseau d'alimentation en tension alternative (1) lorsque la consommation de puissance, en particulier la consommation de puissance électrique, du premier onduleur (3), en particulier au niveau de sa borne située côté tension continue, est négative, en particulier lorsque le moteur électrique (5) alimenté par le premier onduleur (3) fonctionne à l'aide d'une génératrice,
**caractérisé en ce que**
au lieu du premier onduleur (3), une connexion en parallèle du premier onduleur (3) avec d'autres onduleurs et/ou consommateurs est commutée électriquement en parallèle à la borne située coté tension continue du convertisseur CA/CC (2),
l'installation fonctionnant de manière cyclique après une charge de l'accumulateur d'énergie,
des séquences de travail de l'installation, c'est-à-dire le mode de fonctionnement du ou des onduleur(s), étant répétées périodiquement, une période étant appelée cycle et la durée de la période étant appelée temps de cycle,
la valeur de consigne étant le quotient de la quantité d'énergie nécessaire pour l'ensemble du cycle, c'est-à-dire de la quantité d'énergie nécessitée par le premier onduleur (3) ou par tous les onduleurs et/ou consommateurs pour l'ensemble du cycle, et du temps de cycle diminué d'un certain laps de temps,
le laps de temps pendant le cycle comprenant tous les instants où la demande de puissance totale du premier onduleur (3) ou de tous les onduleurs et/ou consommateurs est négative.

2. Procédé selon la revendication 1,
**caractérisé en ce que**
le premier onduleur (3) enregistre sa demande de puissance de manière récurrente et la signale par l'intermédiaire d'un canal de transmission de données à un dispositif de commande (4) qui est connecté par l'intermédiaire de canaux de transmission de données à la fois au convertisseur CA/CC (2) et au convertisseur CC/CC (6), et qui transmet de manière récurrente au convertisseur CA/CC (2) une valeur de consigne pour la puissance à obtenir du réseau d'alimentation en tension alternative par l'intermédiaire du convertisseur CA/CC (2), et qui transmet au convertisseur CC/CC (6) une valeur de consigne pour la puissance à fournir à l'accumulateur d'énergie (7) ou à dissiper.

3. Procédé selon la revendication 1,
**caractérisé en ce que**
l'onduleur ou tous les onduleurs et/ou consommateur(s) enregistre(nt) leur demande de puissance de manière récurrente et la signale(nt) par l'intermédiaire d'un canal de transmission de données respectif à un dispositif de commande (4) qui est connecté par l'intermédiaire de canaux de transmission de données à la fois au convertisseur CA/CC (2) et au convertisseur CC/CC (6), et qui transmet de manière récurrente au convertisseur CA/CC (2) une valeur de consigne pour la puissance à obtenir du réseau d'alimentation en tension alternative par l'intermédiaire du convertisseur CA/CC (2), et qui transmet au convertisseur CC/CC (6) une valeur de consigne pour la puissance à fournir à l'accumulateur d'énergie (7) ou à dissiper.

4. Procédé selon l'une quelconque des revendications précédentes,
**caractérisé en ce que**
le premier onduleur (3) alimente un premier moteur électrique (5).

5. Procédé selon l'une quelconque des revendications précédentes,
**caractérisé en ce que**
l'onduleur ou l'onduleur respectif alimente un moteur électrique (5) respectif.

6. Procédé selon l'une quelconque des revendications 1 à 5,
**caractérisé en ce que**
une valeur est spécifiée pour la quantité d'énergie avant le fonctionnement cyclique, l'énergie de charge présente dans l'accumulateur d'énergie (7) étant déterminée à la fin de chaque cycle et la valeur étant ajustée par un régulateur, en particulier un régulateur **PI,** de telle manière que l'énergie de charge respectivement déterminée est ajustée à une valeur de consigne, en particulier une valeur qui correspond à l'accumulateur d'énergie (7) chargé à plus de 80 %.

7. Installation permettant de mettre en œuvre d'un procédé selon l'une quelconque des revendications précédentes,
l'installation présentant un convertisseur CA/CC (2) pouvant être alimenté à partir d'un réseau d'alimentation en tension alternative et dont la borne située côté tension continue est connectée électriquement en parallèle à une borne située côté tension continue d'un premier onduleur (3) et à une première borne située côté tension continue d'un convertisseur CC/CC (6) au niveau de la deuxième borne située côté tension continue duquel est raccordé un accumulateur d'énergie (7), en particulier un accumulateur et/ou un condensateur à double couche, tel que l'Ultracap,
un dispositif de commande (4) étant connecté au premier onduleur (3), au convertisseur CA/CC (2) et au convertisseur CC/CC (6) au moyen de canaux de transmission de données,
au lieu du premier onduleur (3), un circuit en parallèle du premier onduleur (3) étant commuté électriquement avec d'autres onduleurs et/ou consommateurs en parallèle à la borne située coté tension continue du convertisseur CA/CC (2),
le dispositif de commande (4) étant connecté aux autres onduleurs et/ou consommateurs au moyen de canaux de transmission de données.
